# FASCICULE DE BREVET EUROPEEN

(11) **EP 2 341 688 B1**
(45) Date de publication et mention de la délivrance du brevet: **10.10.2018**
(21) Numéro de dépôt: 10197091.1
(22) Date de dépôt: 27.12.2010
(51) Int. Cl.: H04W 12/06, H04W 84/12, H04W 88/02, H04L 29/06

(54) **Procédé d'authentification securisée d'un terminal itinérant sur un réseau de télécommunications sans fil**
Methode zur sicheren Authentizierung eines Geräts beim roaming in einem drahtlosen Netz.
Method for securely authenticating a terminal roaming in a wireless network.

(30) Priorité: 31.12.2009 FR 0959700
(43) Date de publication de la demande: 06.07.2011
(73) Titulaire: SOCIETE FRANCAISE DU RADIO TELEPHONE (SFR), 75015 Paris (FR)
(72) Inventeur: Passien, Olivier, 78950, Gambais (FR); Guindolet, Stéphane, 75012, Paris (FR)
(74) Mandataire: Ipside

(56) Documents cités:
- US-A1- 2005 109 837
- GSM association: "Mobile Broadband in Notebooks Guidelines Version 4.0", GSM association , 1 décembre 2009 (2009-12-01), XP002595617, Extrait de l'Internet: URL:http://www.gsmworld.com/documents/SE43 40.pdf [extrait le 2010-08-06]
- "Universal Mobile Telecommunications System (UMTS); LTE; 3G security; Wireless Local Area Network (WLAN) interworking security (3GPP TS 33.234 version 8.1.0 Release 8); ETSI TS 133 234", ETSI STANDARD, EUROPEAN TELECOMMUNICATIONS STANDARDS INSTITUTE (ETSI), SOPHIA ANTIPOLIS CEDEX, FRANCE, vol. 3-SA3, no. V8.1.0, 1 février 2009 (2009-02-01), XP014043551,
- NO AUTHOR NAME SUPPLIED IN SOURCE DATA: "Sign-on/authorization using WLAN enabled mobile phones", IP.COM JOURNAL, IP.COM INC., WEST HENRIETTA, NY, US, 15 juin 2004 (2004-06-15), XP013020563, ISSN: 1533-0001
- "3rd Generation Partnership Project; Technical Specification Group Core Network and Terminals; AT command set for User Equipment (UE) (Release 9)", 3GPP STANDARD; 3GPP TS 27.007, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 15 December 2009 (2009-12-15), pages 1-220, XP050400916, [retrieved on 2009-12-15]

## Description

### Domaine de l'invention

La présente invention concerne un procédé d'authentification sécurisée d'un terminal itinérant sur un réseau de télécommunications sans fil. Le domaine de l'invention est celui des réseaux radiofréquence sans fil, également connus sous l'acronyme 'WLAN' pour l'expression anglo-saxonne 'Wireless Local Area Network' et, plus particulièrement dans ce domaine, un procédé d'authentification d'un ordinateur personnel portatif pour accéder de manière sécurisée au réseau sans fil.

### Etat de la technique

Aujourd'hui, de plus en plus de terminaux de communications itinérants de type ordinateurs portables sont équipés de carte Wi-Fi. De ce fait, depuis l'apparition de la technologie Wi-Fi, les connexions, sur les points d'accès publics également connus sous l'appellation de HotSpot, à un réseau de télécommunications sans fil ne cessent d'augmenter. Il est ainsi possible aux usagers de profiter de la bande passante Wi-Fi par l'intermédiaire de ces points d'accès publics afin d'accéder depuis le terminal de communication à une messagerie, au réseau Internet, ou à des applications partagées.

Les points d'accès publics sont placés par des opérateurs de télécommunications dans des lieux publics tels que les hôtels, gares, aéroports, cafés, centres de conférences, galeries marchandes, c'est à-dire dans des lieux à très forte fréquentation pour permettre aux usagers d'accéder à un réseau de télécommunication de l'opérateur via le réseau sans fil.

Un utilisateur doit s'authentifier avant toute association avec un point d'accès. Actuellement, il existe principalement deux types de procédures d'authentification, l'une non sécurisée et l'autre qui est une méthode dite de défi/réponse.

Dans ladite première procédure d'authentification, l'accès au réseau sans fil se fait par la fourniture d'un identifiant et d'un mot de passe, moyennant un abonnement ou une carte prépayée. Le principal inconvénient de ce type de réseau est le manque de sécurité dans le transfert de données et surtout au niveau de l'authentification d'un utilisateur souhaitant se connecter au réseau, le mot de passe étant facilement partageable, transférable ou même facilement retrouvé ou deviné.

En effet, lors de cette connexion au point d'accès public sans protocole de cryptage, ce qui correspond à la grande majorité des points d'accès publics, n'importe qui peut intercepter les informations qui circulent sur le réseau telles que les e-mails, les fichiers joints, les identifiants et mots de passe.

Pour résoudre ce problème, il existe une méthode de confidentialité connue qui vise essentiellement à la protection des données véhiculées sur le réseau. Cette méthode consiste à utiliser un réseau virtuel privé ou tunnel VPN (Virtual Private Network) sur la connexion Wi-Fi. A l'intérieur de ce tunnel, les données sont protégées grâce à l'utilisation de techniques de chiffrement ou d'encapsulation.

Toutefois, une sécurisation efficace des VPN passe par une gestion des clés, rendant l'administration des VPN plus lourde à gérer. En outre, les VPN peuvent imposer une gestion de tables de routage et d'authentification très conséquentes, pouvant constituer le talon d'Achille de la sécurité des VPN, si leur contenu est erroné. Par conséquent, même si cette deuxième méthode est sûre, elle se prête mal à un déploiement à grande échelle. L'utilisation du VPN nécessite que le réseau Wi-Fi supporte le protocole du VPN en question et requiert également un paramétrage manuel par l'utilisateur de son compte VPN.

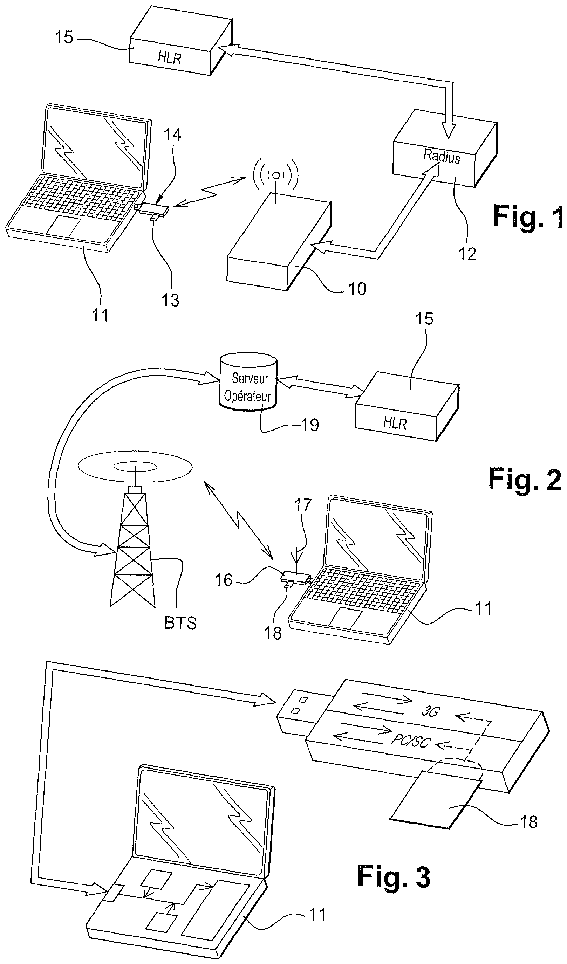

Il est connu également une deuxième procédure d'authentification montrée à la figure 1 qui vise essentiellement à résoudre les problèmes de sécurité dans l'authentification d'un utilisateur. L'accès au réseau est contrôlé par un authentificateur 10 EAP qui est l'équipement d'accès au réseau (point d'accès) qui bloque le trafic en provenance du terminal 11 jusqu'à ce que ce dernier s'authentifie et à condition qu'il dispose des bonnes autorisations. Le point d'accès 10 fait authentifier l'utilisateur par un serveur 12 d'authentification comme par exemple un serveur RADIUS (Remote Authentication Dial up User service) en s'appuyant sur un protocole d'authentification (Extensible authentication protocol, EAP). Ce protocole EAP permet entre autre d'utiliser un échange d'authentification, dit échange «challenge - response ».

Pour ce faire, un module 13 d'identification est intégré dans le terminal 11 permettant au point d'accès 10 d'authentifier ledit terminal avant de lui donner accès à ses ressources réseau. Le module 13 d'identification est une carte à puce contenant des données confidentielles de l'utilisateur ; de telles cartes sont connues dans la téléphonie sous l'acronyme SIM pour 'Subscriber Identity Module'. Plus généralement, de telles cartes constituent des cartes d'identité de l'abonné, contenant notamment son identité internationale (IMSI = International Mobile Subscriber Identity) et une clé secrète pour des opérations d'authentification sur le réseau.

L'exécution du protocole EAP est assurée en partie par le terminal 11 et en partie dans la carte SIM, où EAP est implémenté comme une application de la carte et sélectionné au moment d'une ouverture d'une session Wi-Fi. L'authentificateur 10 n'interprète pas le contenu des messages EAP, mais il relaie les requêtes d'authentification au serveur 12 d'authentification, par exemple sous la forme de messages RADIUS. Le serveur 12 d'authentification relaie à son tour les requêtes d'authentification à une base de données centrale 15 HLR (HLR, *Host Location Register*). Cette base de données 15 centrale stocke pour chaque utilisateur, identifié par son IMSI, ses droits (le type d'abonnement souscrit) et la clé Ki. A la fin de ces échanges, l'authentificateur 10 analyse le message notifiant l'échec ou le succès de la procédure d'authentification.

L'ajout de cartes à puce dans les architectures sans fil introduit un niveau de sécurité supplémentaire puisque l'utilisateur n'a pas accès aux clés cryptographiques requises pour son authentification. De manière analogue au réseau GSM, la puce est la propriété d'un fournisseur de service réseau (entreprise, administration, opérateur, ...), il est difficile de cloner un tel composant. Il existe quelques similarités entre la procédure d'authentification GSM et le modèle de sécurité 802.11.

Toutefois, cette deuxième procédure d'authentification présente des inconvénients. En effet, aujourd'hui, les solutions d'authentification forte EAP-SIM du marché pour les «Netbooks» et les PC reposent sur l'utilisation d'un PC/SC driver (Personal Computer/Smart Card). Les données enregistrées dans la carte SIM ne peuvent être lues que par l'intermédiaire d'un lecteur 14 de carte spécifique PC/SC connecté au terminal 11 par un lien USB. Ce lecteur 14 de carte PC/SC propriétaire est réalisé selon une standardisation préconisée par une entité nommée PC/SC Workgroup qui a mis sur pied une spécification, appelée PC/SC pour PC Smart Card, qui permet de définir une interface pour l'utilisation de lecteurs de cartes à puce sous Windows ou Linux. En outre, cette deuxième procédure, en sus d'être une authentification propriétaire, peut être une méthode d'authentification unilatérale dans la mesure où le client s'authentifie auprès du serveur 12, mais ne peut pas authentifier le serveur 12. Il n'est parfois pas possible avec cette méthode de détecter de faux serveurs EAP et donc des points d'accès malveillants contrôlés par des intrus.

Le protocole EAP-SIM peut être réalisé selon plusieurs méthodes d'authentification différentes. Par conséquent, des études actuelles portent sur une interopérabilité entre toutes les cartes EAP-SIM développées et proposées par l'industrie de la carte SIM.

Aujourd'hui, il existe une alternative au réseau sans fil qui est l'accès au réseau de téléphonie mobile pour un usager itinérant via une clé 16 USB 3G, comme montré à la figure 2. La clé 16 USB 3G est un modem qui utilise le réseau de télécommunications mobiles de l'opérateur. Ce modem se destine aux utilisateurs souvent en déplacement, qui doivent se connecter à Internet à n'importe quel moment et qui ne veulent pas être dépendants d'un réseau Wi-Fi ou d'une prise téléphonique.

Le modem 16 comporte une antenne 17 et un compartiment dans lequel est insérée une carte 18 USIM. Les pilotes et les programmes de fonctionnement du modem 16 sont préinstallés dans une mémoire programme dudit modem. Au branchement sur le terminal 11, le modem est reconnu comme un lecteur amovible et un microprocesseur du modem exécute le programme et installe le pilote dès le branchement de la clé USB 16, puis ensuite demande le code PIN de la carte USIM. Le programme dispose déjà des paramètres pour la connexion au réseau et choisit automatiquement le réseau le plus rapide (2G ou 3G).

Le programme permet en outre de gérer les SMS, les e-mails : envoi, réception, et autres applications liées aux fonctionnements GSM tels que le changement du code PIN, la gestion du code PUK ou la gestion des APN GSM.

La procédure d'authentification dans le réseau de téléphonie mobile est effectuée selon la norme 3GPP. La carte USIM stocke l'identité de son utilisateur (IMSI) et met en oeuvre un algorithme d'authentification associé à une clé secrète Ki. La communication entre le terminal 11 et un serveur 19 de l'opérateur du réseau se fait par l'intermédiaire d'une station de base BTS (2G) ou Node-B (3G). La procédure d'authentification est établie entre la carte USIM et la base de données 15 centrale HLR.

Cependant ce type de connexion au réseau de téléphonie mobile présente des inconvénients. En effet, le réseau de télécommunications mobiles n'est pas adapté pour des volumes de données importantes car le temps entre une demande et sa latence est très élevée, de l'ordre de 500 ms (moins de 50 ms en Wi-Fi).

Compte tenu du coût de production du Mégaoctet via le réseau mobile, le volume de données octroyé par l'opérateur à l'utilisateur est une limite importante. En effet, impossible par exemple de télécharger de la musique ou de faire de la vidéo à la demande : la limite serait vite atteinte.

Si la couverture du réseau en 3G n'est pas assurée, la vitesse reste faible.

Ainsi, la connexion au réseau de télécommunications mobiles est une connexion d'appoint où il faut se limiter principalement à quelques sites Internet, à un peu de messagerie instantanée et à la gestion des e-mails.

Un besoin s'est fait sentir de disposer à la fois d'une connexion au réseau sans fil sécurisée et au réseau de télécommunications mobiles pour un utilisateur d'un ordinateur personnel portable.

Pour répondre à ce besoin, une première solution consiste à fournir un login / password à l'utilisateur et lui permettre de se connecter dès qu'il le peut et le souhaite à un réseau Wi-Fi. Cette solution présente néanmoins les inconvénients présentés en préambule (ie. login et password partageable et devant être mémorisés). De plus la connexion au réseau Wi-Fi n'est pas automatisée et nécessite une action de l'utilisateur.

Une solution alternative consiste à munir le terminal itinérant d'un lecteur de clé USB 3G et d'un lecteur spécifique PC/SC. Ce système est rédhibitoire et très peu convivial pour l'utilisateur car le coût d'une connexion à Internet est relativement important, parce qu'il devra se munir de deux périphériques distincts et qu'en outre il devra être titulaire de deux abonnements distincts de connexion à Internet. En outre, le fait de réaliser une authentification forte à la fois en Wi-Fi et en 3G, impliquant de devoir disposer à la fois d'un lecteur PC/SC et d'une clef 3G conduit à abandonner l'aspect transparence pour l'utilisateur.

Pour résoudre ce problème, il est connu d'utiliser une clé 3G dans laquelle est intégré le driver PC/SC, comme représenté à la figure 3. L'application d'authentification EAP-SIM est téléchargée dans la carte USIM 18 de la clé 16.

Ce système présente des inconvénients. En effet, l'activation d'une session USIM exclut l'activation d'une session EAP-SIM et vice versa. En particulier, une fois qu'une session USIM est activée, une commande d'activation de l'application EAP-SIM envoyée à la carte aura par exemple comme réponse '6E 00' : pour «application non supportée» par le modem. De ce fait, l'utilisateur ne pourra pas se connecter simultanément au réseau de télécommunications mobiles et au réseau sans fil.

Outre les inconvénients cités, peu de fournisseurs proposent un terminal 11 disposant d'une compatibilité PC/SC Driver. Le coût et l'encombrement d'un second hardware dans le cadre d'un équipement type clé électronique ou Smart Dongle n'est pas négligeable voire pas compatible avec un usage grand public. Il n'existe pas d'interopérabilité dans les lecteurs PC/SC existants.

Ainsi, il existe aujourd'hui un besoin de trouver un moyen économique, sécurisé, fiable et simple pour permettre à l'utilisateur itinérant de pouvoir se connecter à la fois au réseau de télécommunications mobiles et au réseau sans fil, via un ordinateur portable. Plusieurs études sont actuellement en cours dans ce sens.

On connaît dans l'état de la technique les documents suivants :
- XP002595617 GSM Association « Mobile Broadband in Notebooks Guidelines Version 4.0 (1er décembre 2009) ;
- XP014043551 "Universal Mobile Telecommunications System (UMTS) ; LTE; 3G security; Wireless Local Area Network (WLAN) interworking security (3GPP TS 33.234 version 8.1.0 Release 8) ; ETSI TS 133 234 *;*
- XP013020563 *"Sign-on*/*authorization using WLAN enabled mobile phones"* ;
- La demande de brevet américain N° US 2005/109837 A1, qui se rapporte à un procédé et à un algorithme for accéder à une carte à puce stockée dans une carte de télécommunications d'un dispositif hôte auquel ladite carte de télécommunication est connectée.

### Exposé de l'invention

L'invention a justement pour but de répondre à ce besoin tout en remédiant aux inconvénients des techniques précédemment citées. Pour ce faire, l'invention a pour objet un procédé d'authentification transparente et sécurisée sur un réseau sans fil. Ce procédé d'authentification est fondé sur la carte USIM, sans saisie préalable par l'utilisateur d'un identifiant / mot de passe, dans les environnements ordinateurs équipés de modems compatibles avec la norme 3GPP.

Pour supprimer cette contrainte d'utilisation d'un lecteur PC/SC propriétaire et n'utiliser que des clefs 3G standard, l'invention a mis en oeuvre un moyen pour dialoguer avec la carte USIM et l'application EAP-SIM téléchargée dans la carte tout en restant conforme aux standards UICC des normes : 3GPP TS 27.007 V8.5.0 (2008-09), ETSI 102.221 V8.0.0 (2008-08), ISO/IEC 7816-4 (Jan 2005).

Le procédé de l'invention permet de réaliser une émulation du driver PC/SC par le biais d'un port applicatif standard d'un modem 3G compatible 3GPP. Cette émulation se base sur un double apport logiciel : sur l'ordinateur de l'utilisateur et sur la carte SIM du modem 3G. Elle se base également sur une synchronisation des actions entre ces deux couches logicielles permettant ainsi de présenter des réponses efficaces aux problématiques de gestion de la séquentialité des accès à la carte SIM.

Un avantage de l'invention est de permettre à un usager itinérant de s'authentifier de façon sécurisée et transparente à la norme EAP-SIM (IETF RFC 4186) favorisant ainsi l'usage des réseaux sans fil.

Un autre avantage de l'invention est d'assurer une compatibilité avec n'importe quel modem 3GPP existant et à venir, compatible avec la norme 3GPP. Plus précisément, l'invention a pour objet un procédé d'authentification sécurisée d'un terminal itinérant dans lequel :
- le terminal est capable d'entrer en relation avec un réseau de télécommunications mobiles par l'intermédiaire d'un modem de télécommunications mobiles muni d'une carte USIM,
- le terminal entre en relation avec un serveur d'applications, d'un réseau de télécommunications sans fil par l'intermédiaire d'une borne d'accès sans fil, à l'issue d'une procédure d'authentification de la carte USIM par un serveur d'authentification selon un protocole d'authentification EAP,
caractérisé en ce que lors de la procédure d'authentification une session de dialogue est initiée entre le terminal et la carte USIM, selon un protocole de communication sécurisée avec des commande/réponses comportant une première séquence prédéterminée de type AT+CSIM.

Avantageusement, l'invention est également caractérisée en ce que la production et l'émission des commandes et des réponses, par respectivement le terminal et la carte USIM, sont ordonnancées selon une séquence adéquate préalablement définie par l'intermédiaire d'une application d'ordonnancement AT-CSIM.

Avantageusement, l'invention est également caractérisée en ce que l'application d'ordonnancement AT-CSIM de la carte USIM est distincte d'une application USIM.

Avantageusement, l'invention est également caractérisée en ce que la carte USIM comporte une application comprenant un protocole EAP-SIM ou EAP AKA distincte de l'application USIM et de l'application d'ordonnancement AT-CSIM.

Avantageusement, l'invention est également caractérisée en ce que lors de la procédure d'authentification :
- le serveur d'authentification génère des vecteurs d'authentification,
- ledit serveur émet un message de challenge à partir desdits vecteurs à destination de la carte USIM,
- la carte USIM calcule une réponse au message challenge en fonction des vecteurs d'authentification et des données secrètes enregistrées au préalable dans la carte,
- on crée un certificat de session en réponse à la requête de connexion autorisant l'accès du terminal au serveur d'applications par l'intermédiaire de la borne.

Avantageusement, l'invention est également caractérisée en ce que les vecteurs d'authentification comportent un nombre aléatoire RAND, un paramètre SRES' calculé à l'aide d'un algorithme d'authentification, une clé secrète Ki de la carte USIM, une clé de chiffrement Kc.

Avantageusement, l'invention est également caractérisée en ce que lors de la procédure d'authentification, la communication entre la carte USIM et le serveur d'authentification s'effectue par l'intermédiaire du terminal.

Avantageusement, l'invention est également caractérisée en ce que lors d'une session de dialogue entre le terminal et la carte USIM, on enregistre dans une mémoire temporaire toutes commandes à destination de la carte autres que celles de la session de dialogue.

Avantageusement, l'invention est également caractérisée en ce que les commandes enregistrées dans la mémoire temporaire sont traitées à la fin de la session de dialogue selon un ordre première enregistrée, première exécutée.

Avantageusement, l'invention est également caractérisée en ce que le terminal produit les commandes AT-CSIM directement exécutable par la carte USIM, sans codage/décodage par le modem.

Avantageusement, l'invention est également caractérisée en ce que le serveur d'applications est notamment un serveur de connexion à Internet via le réseau sans fil, un serveur de télévision, un serveur de localisation géographique du terminal ou un serveur de télévision cryptée.

L'invention a également pour objet un terminal comportant des moyens configurés de sorte à exécuter une application d'ordonnancement AT-CSIM d'une session de dialogue avec une carte USIM afin d'authentifier ladite carte sur un réseau sans fil via une borne d'accès selon l'invention.

L'invention a également pour objet un modem 3G muni d'une carte USIM caractérisé en ce que la carte comporte des moyens configurés de sorte à exécuter une application d'ordonnancement AT-CSIM d'une session de dialogue avec un terminal portatif afin d'authentifier ladite carte sur un réseau sans fil via une borne d'accès selon l'invention. La présente invention est définie par les revendications indépendantes 1 et 12.

### Brève description des dessins

L'invention sera mieux comprise à la lecture de la description qui suit et à l'examen des figures qui l'accompagnent. Celles-ci ne sont présentées qu'à titre indicatif et nullement limitatif de l'invention.
Les figures 1, 2 et 3 montrent une représentation schématique de trois modes de connexions à Internet de l'état de la technique, déjà décrits.
La figure 4 montre une représentation schématique d'un moyen de connexion à un réseau de télécommunications sans fil avec un modem 3G de téléphonie mobile selon un mode de réalisation de l'invention.
La figure 5 montre une représentation schématique d'une architecture du terminal itinérant de l'utilisateur selon un mode de réalisation de l'invention.
La figure 6 montre une représentation schématique d'une architecture de la carte USIM du modem 3G selon un mode de réalisation de l'invention.
La figure 7 montre une représentation schématique d'une architecture du modem 3G selon un mode de réalisation de l'invention.
La figure 8 montre une illustration d'étapes du procédé de fonctionnement selon un mode de réalisation de l'invention.
La figure 9 montre un exemple de session de dialogue entre le terminal et la carte USIM selon un mode de réalisation de l'invention.
La figure 10 montre une représentation schématique d'un exemple d'une hiérarchisation des répertoires enregistrés dans la carte USIM selon un mode de réalisation de l'invention.
La figure 11 montre une représentation schématique d'une comparaison entre les moyens mis en oeuvre dans l'invention et dans l'état de la technique.
La figure 12 montre une représentation schématique d'une procédure d'authentification de la carte USIM selon un mode de réalisation de l'invention.

### Description détaillée de modes de réalisation de l'invention

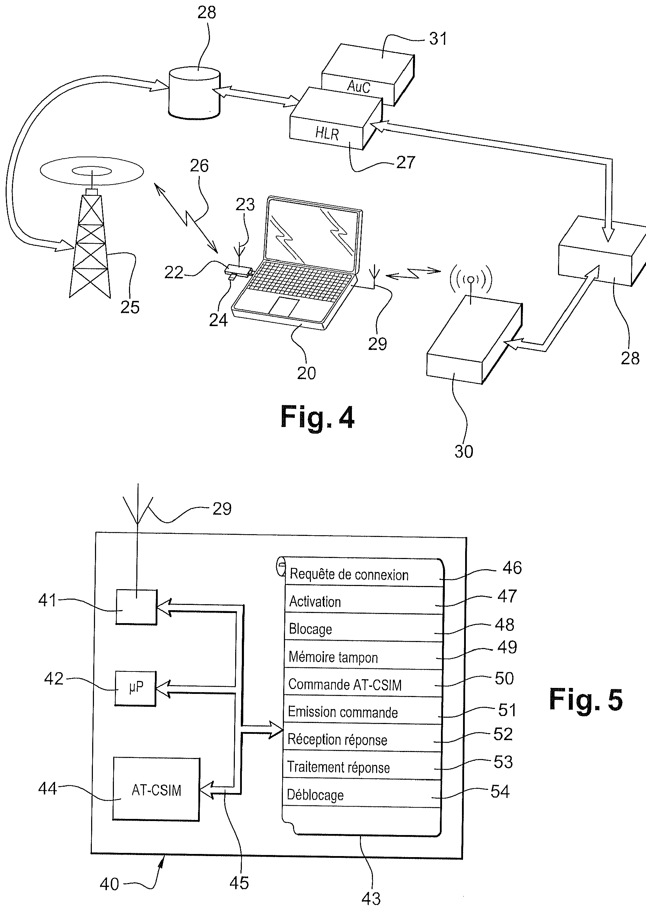

La figure 4 montre de manière schématique les entités qui interviennent dans un procédé de génération et de distribution d'un certificat de session, par l'intermédiaire d'une carte USIM 24 d'un modem 3G de téléphonie mobile, pour accéder à un réseau 80 de télécommunications sans fil.

Le réseau 80 de télécommunications sans fil peut être un réseau local sans fil utilisant la bande de fréquence des 2,4 GHz permettant un débit de 11 Mb/s ou la bande de fréquence des 5 GHz permettant un débit de 54 Mb/s. Il existe plusieurs normes Wi-Fi utilisant des canaux de transmission différents tels que :
- le Wi-Fi 802.11a permettant d'obtenir un débit théorique de 54 Mbps (30 Mbps réels)
- le Wi-Fi 802.11b permettant d'obtenir un débit théorique de 11 Mbps (6 Mbps réels) avec une portée pouvant aller jusqu'à 300 mètres dans un environnement dégagé.
- le Wi-Fi 802.11g permettant d'obtenir un débit théorique de 54 Mbps (30 Mbps réels) sur la bande de fréquence des 2.4 GHz.

La figure 4 montre un terminal 20 itinérant. Ce terminal 20 est un ordinateur personnel portable. Il peut être également un assistant numérique personnel.

Le terminal 20 est connecté via un lien USB à un modem 22 de télécommunications mobiles. Le lien USB est une interface du terminal 20 permettant à une unité de commande 40 du terminal 20 de lire les données enregistrées sur une carte USIM 24 du modem 22 et de procéder à l'authentification de l'utilisateur.

Ce modem 22 est destiné à connecter le terminal 20 à un réseau 81 de télécommunications mobiles de l'opérateur. Le modem 22 comporte une antenne 23 et un compartiment dans lequel est insérée la carte 24 USIM. Les pilotes et les programmes de fonctionnement du modem 22 sont préinstallés dans une mémoire programme dudit modem. Au branchement sur le terminal 20, le modem 22 est reconnu comme un lecteur amovible et un microprocesseur du modem exécute le programme, installe le pilote et ensuite demande le code PIN de la carte USIM. Le programme dispose déjà des paramètres pour la connexion au réseau et choisit automatiquement le réseau le plus rapide (2G ou 3G).

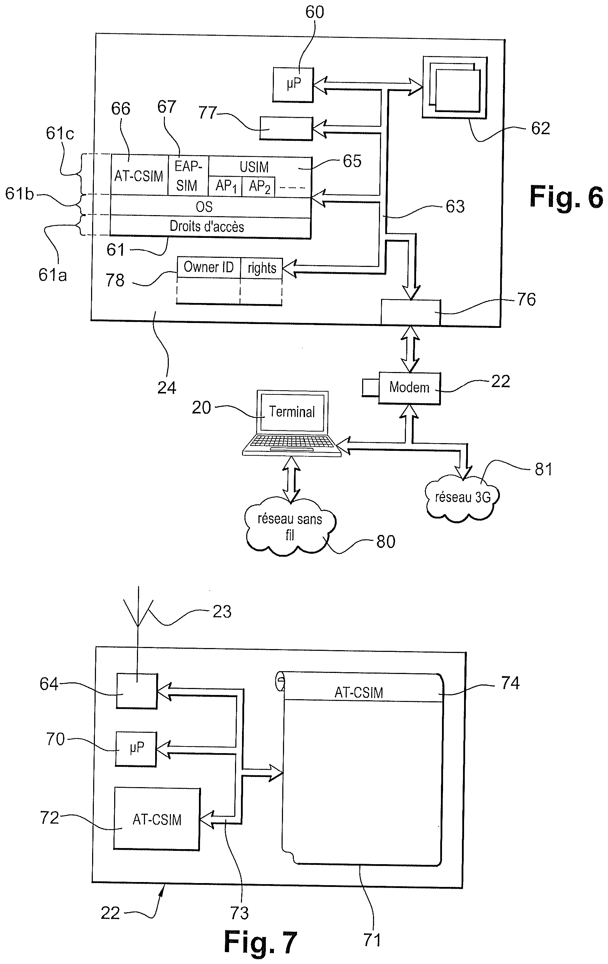

Comme représenté plus en détail à la figure 6, la carte 24 USIM comporte des données permettant d'identifier l'usager de façon unique. Chaque carte USIM 24 possède un numéro d'identification unique (et secret) appelé IMSI (*International Mobile Subscriber Identity*). Ce code peut être protégé à l'aide d'une clé de 4 chiffres composant le *code PIN.* La carte USIM 24 permet au réseau 81 mobile d'identifier chaque utilisateur, indépendamment du terminal 20 utilisé, lors de la communication avec une station de base 25. La communication entre le terminal 20 et la station de base 25 se fait par l'intermédiaire d'un lien radioélectrique 26.

Le réseau 81 de téléphonie mobile comprend un équipement important, nommé enregistreur 27 de localisation nominal HLR , qui officie en tant que base de données centrale contenant l'ensemble des données relatives à chacun des abonnés autorisés à utiliser le réseau 81 mobile. Afin que les données soient cohérentes sur l'ensemble du réseau, c'est elle qui sert de référence aux autres bases de données locales du réseau, telle que la base de données d'un serveur 28 d'applications du réseau.

Le serveur 28 d'applications peut être notamment un serveur de connexion à Internet via le réseau sans fil, un serveur de télévision, un serveur de localisation géographique du terminal ou un serveur de télévision cryptée ou d'une façon générale tout serveur d'applications, qui nécessite une authentification et même un cryptage des données, interconnecté avec le serveur de base de données centrale 27 et apte à vérifier la cohérence des éléments d'authentifications fournis.

La base de données centrale 27 est automatiquement remplie, lors de l'inscription d'un nouvel abonné auprès d'un opérateur de téléphonie. Le système d'information commerciale (SIC) à partir duquel le service commercial procède à l'inscription contractuelle du nouvel abonné met à jour la base de données HLR avec les nouvelles données saisies, notamment l'attribution d'identifiants de l'abonné (numéro IMSI et numéro MSISDN correspondant au numéro d'appel de l'abonné [Mobile Station Integrated Services Digital Network]). Ce remplissage de la base 27 de données HLR est toujours à l'initiative du système d'information SIC.

L'enregistreur 27 HLR comporte ainsi notamment pour chaque terminal l'identité internationale IMSI de la carte USIM insérée dans le terminal, c'est-à-dire de l'abonné possesseur de la carte USIM, le numéro d'annuaire et le profil d'abonnement de l'abonné.

L'enregistreur 27 HLR coopère avec un centre d'authentification AUC 31 relié à des commutateurs de services mobiles à travers le réseau de signalisation du réseau 81 de radiotéléphonie.

Le centre d'authentification AUC 31 assure l'authentification des abonnés préalablement à toute communication avec le terminal 20 ou bien lors de la mise en fonctionnement du terminal 20 ou lors d'un transfert intercellulaire. Il participe également à la confidentialité des données transitant dans l'interface radio entre le terminal 20 et la station de base 25 auquel il est rattaché à un instant donné.

Le centre d'authentification AUC 31 gère un algorithme d'authentification et un algorithme de détermination de clé de chiffrement. Ces algorithmes sont également présents dans la carte USIM 24 du modem 22. Le centre d'authentification AUC 31 mémorise en outre une clé d'authentification Ki attribuée uniquement à l'abonné. Cette clé avec l'identité IMSI de l'abonné est mémorisée dans l'enregistreur de localisation nominal HLR lors de la souscription d'abonnement par l'abonné.

L'authentification du terminal 20 sur le réseau 81 de téléphonie mobile est effectuée afin de vérifier, de manière sure, l'identité de l'utilisateur. Cette procédure d'authentification s'effectue selon la norme 3GPP TS 33 102.

Le terminal 20 est muni d'un adaptateur Wi-Fi 29 intégré ou non. Cet adaptateur 29 permet de connecter entre eux des ordinateurs équipés d'adaptateurs spécialisés (cartes Wi-Fi) sur un rayon de plusieurs dizaines, voire centaines, de mètres. Cet adaptateur Wi-Fi 29 permet également de relier le terminal 20 à Internet par l'intermédiaire d'une borne 30 d'accès sans fil.

L'adaptateur Wi-Fi 29 et l'antenne 23 sont connectés respectivement à des circuits d'interface entre les réseaux sans fil 80 et de téléphonie mobile 81. Les circuits d'interface réalisent respectivement la conversion entre les signaux du bus interne du terminal 20 et du modem 22 et les signaux reçus/émis via l'adaptateur 29 Wi-Fi et l'antenne 23. Ces circuits sont donc une interface radioélectrique permettant au terminal 20 de communiquer sur un réseau 81 de téléphonie mobile et sur un réseau 80 sans fil. Via ces circuits, le terminal 20 est donc apte à communiquer sur un réseau de type Internet et donc apte à atteindre ou être atteint par n'importe quel serveur 28 d'applications connecté à ce réseau.

L'authentification de la carte USIM 24 sur le réseau 80 sans fil se fait selon un protocole EAP. Le protocole EAP agit comme un mécanisme d'authentification arbitraire permettant d'authentifier une connexion d'accès distant. Le modèle d'authentification utilisé est négocié par le terminal 20 via la carte USIM 24 et un serveur d'authentification 32 qui peut être un serveur d'accès distant ou un serveur de type RADIUS.

Le protocole EAP permet une conversation évolutive entre le terminal 20 et le serveur d'authentification 32. La conversation est composée de demandes en informations d'authentification, émanant du serveur d'authentification 32 et de réponses provenant du terminal 20. Après chaque question et réponse, le terminal 20 passe au niveau suivant d'authentification. Lorsque toutes les questions ont fait l'objet d'une réponse satisfaisante, le terminal 20 est authentifié.

Un modèle d'authentification EAP spécifique s'appelle un type EAP. Le client d'accès distant et le responsable de l'authentification doivent tous les deux prendre en charge le même type EAP pour que l'authentification soit réussie.

Dans un mode de réalisation préféré, le modèle d'authentification EAP est le protocole EAP-SIM. Dans une variante, le modèle d'authentification EAP peut également être celui de l'EAP-AKA.

Pour authentifier la carte USIM 24, lors d'une connexion au réseau sans fil, l'invention met en oeuvre un protocole de communication plus sécurisée entre la carte USIM 24 et le terminal 20. En effet dans l'invention, le modem 22 initialise la carte USIM 24 par une session USIM alors que le driver PC/SC initialise la carte USIM par une session GSM. De ce fait, le protocole de communication de l'invention effectué en mode USIM Session est plus sécurisé que le protocole de communication qu'autorise un PC/SC driver effectué en mode GSM Session. Ainsi, avec l'invention, c'est la façon d'accéder à la carte USIM qui est plus sécurisée pour réaliser la mise en oeuvre du protocole EAP.

Pour communiquer de manière standardisée avec la carte USIM 24, le protocole de l'invention utilise des commandes/réponses comportant un attribut AT-CSIM défini par la norme 3GPP.

Avec l'invention, la carte USIM 24 du modem 3G permet à la fois une authentification de l'utilisateur sur le réseau 81 mobile et sur le réseau 80 sans fil. De ce fait, l'invention permet de s'affranchir de la nécessité d'un lecteur spécifique propriétaire PC/SC pour s'authentifier sur le réseau sans fil.

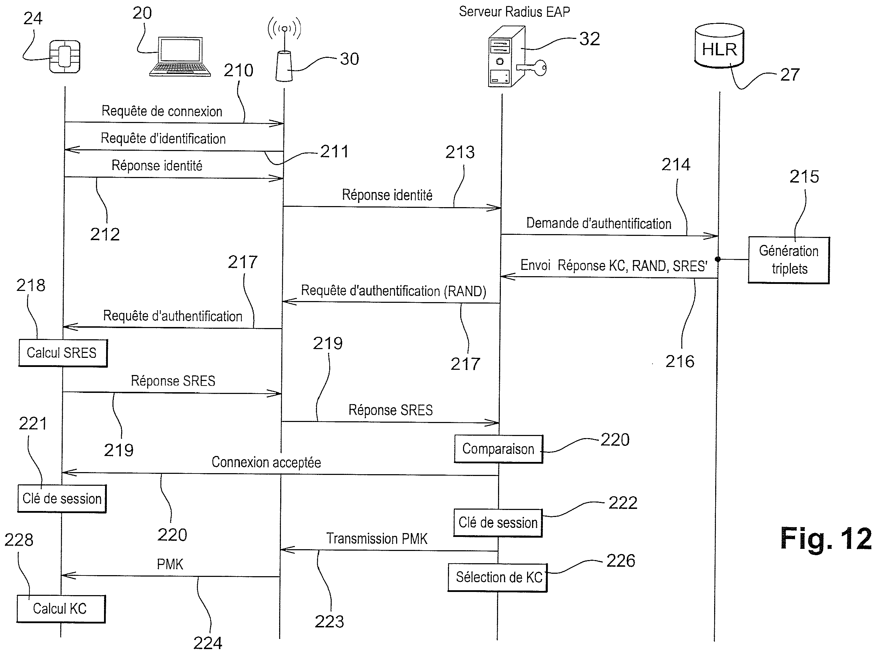

Utiliser la norme 3GPP pour communiquer avec la carte USIM pour une authentification sur un réseau sans fil est aujourd'hui non préconisé. Un exemple de procédure d'authentification sur le réseau 80 sans fil est décrit en détail à la figure 12, selon un mode de réalisation de l'invention.

Dans la description, on prête des actions à des appareils ou à des programmes, cela signifie que ces actions sont exécutées par un microprocesseur de cet appareil ou de l'appareil comportant le programme, ledit microprocesseur étant alors commandé par des codes instructions enregistrés dans une mémoire de l'appareil. Ces codes instructions permettent de mettre en oeuvre les moyens de l'appareil et donc de réaliser l'action entreprise.

La figure 5 montre une représentation schématique d'une architecture du terminal 20. Le terminal 20 comporte des circuits électroniques 41 connectés à l'adaptateur 29 Wi-Fi. Le rôle des circuits est d'assurer l'interface radio entre l'unité de commande 40 et le réseau sans fil 80.

L'unité de commande 40 comporte en outre un microprocesseur 42, une mémoire de programme 43 et une mémoire de données 44 connectés à un bus 45 bidirectionnel. La mémoire de programme 43 est divisée en plusieurs zones, chaque zone correspondant à une fonction ou à un mode de fonctionnement du programme d'ordonnancement de l'exécution du procédé de l'invention. De même, lorsque l'on prête une action à un programme, cette action correspond à la mise en oeuvre par un microprocesseur, connecté à une mémoire dans laquelle est enregistré le programme, de tout ou partie des codes instructions formant ledit programme.

Seules les zones de la mémoire intéressant le plus directement l'invention sont représentées.

Une zone 46 comporte des codes instructions pour recevoir et traiter une requête de connexion au serveur d'applications 28 par l'intermédiaire du réseau sans fil. Cette requête est transmise à l'unité de commande en conséquence d'une validation par l'utilisateur de cette saisie, en cliquant, par exemple, sur une icône de l'application visualisée sur une interface de saisie du terminal 20. Une zone 47 comporte des codes instructions pour activer un programme AT-CSIM d'ordonnancement de la communication entre le terminal 20 et la carte USIM 24.

Une zone 48 comporte des codes instructions pour bloquer toutes les commandes et communications à destination de la carte USIM 24 à l'exception de celles du programme d'ordonnancement activées par les codes instructions de la zone 47. Une zone 49 comporte des codes instructions pour enregistrer les commandes bloquées par les codes instructions de la zone 48 dans une mémoire tampon.

Une zone 50 comporte des codes instructions pour déclencher une session de dialogue avec la carte USIM 24 à partir de commande/réponse AT-CSIM de la norme 3GPP. Cette session de dialogue est supervisée par le programme d'ordonnancement de la zone 47. Une zone 51 comporte des codes instructions pour transmettre la commande élaborée par les codes instructions de la zone 50 à la carte USIM 24, par l'intermédiaire du modem 22.

Une zone 52 comporte des codes instructions pour recevoir une réponse AT-CSIM à une commande AT CSIM de la session de dialogue. Une zone 53 comporte des codes instructions pour traiter une réponse AT-CSIM comportant un certificat de session, éventuellement en l'enregistrant dans une mémoire et le transmettre à la borne d'accès 30. La borne d'accès 30 autorise la connexion au serveur d'applications 28 comportant l'application activée par l'intermédiaire du réseau sans fil si la demande d'authentification de la carte USIM 24 au réseau est satisfaite. Dans le cas contraire, la demande d'authentification échoue et l'abonné ne peut accéder au serveur 28 d'applications via le réseau 80 sans fil.

Le programme d'ordonnancement comporte des codes instructions pour produire, lors de la session de dialogue, les commandes AT-CSIM et traiter les réponses AT-CSIM reçues, dans une séquence adéquate préalablement définie.

Une zone 54 comporte des codes instructions pour désactiver le programme d'ordonnancement de communication. Les codes instructions de la zone 54 exécutent les commandes enregistrées dans la mémoire de programme selon un ordre «premier enregistré dans la mémoire tampon, premier exécuté».

La figure 6 montre une représentation schématique d'une architecture de la carte USIM 24 connectée à un réseau 80 sans fil, via l'adaptateur Wi-Fi 29 du terminal 20 et à un réseau 81 de téléphonie mobile, via l'antenne 23 du modem 22.

La carte USIM 24 comporte des circuits 76 d'interface entre le bus 63 de la carte et le bus du modem 20. Ces circuits 76 permettent de réaliser la conversion entre les signaux du bus 63 et les signaux reçus/émis via le bus du modem 22.

La carte USIM 24 comporte aussi en particulier, mais de manière non limitative, un microprocesseur 60, une mémoire 61 de programme, une mémoire 62 de données et une mémoire 78 de traitement des données. Les éléments 60 à 62 et 78 sont interconnectés par le bus 63.

La carte à puce USIM 24 comprend en outre une mémoire de démarrage non représentée. Cette mémoire de démarrage comporte des codes instructions exécutés par le microprocesseur 60 à la mise sous tension du modem 20. Dans la pratique, il s'agit d'une ROM ou d'une PROM, ce qui rend la corruption des codes instructions qui y sont enregistrés très difficile et réservée à des spécialistes.

La mémoire 61 est une mémoire morte ROM, dite de programmes incluant généralement un système d'exploitation et des algorithmes d'applications ADF. Pour mieux comprendre l'invention, on a découpé la mémoire 61 en trois zones. Une zone 61a de vérification des droits d'accès, une zone 61b de système d'exploitation et plus particulièrement de gestion de l'accès aux applications et une zone 61c d'applications utilisables par un utilisateur.

Dans la zone 61c sont notamment téléchargées une application AT-CSIM 66, une application EAP-SIM 67 et une application USIM 65. L'application AT-CSIM 66 est l'équivalent du programme d'ordonnancement installé dans le terminal 20. Elle permet, entre autres, de traiter les commandes AT-CSIM reçues et de produire les réponses AT-CSIM correspondantes dans une séquence adéquate préalablement définie.

L'application EAP-SIM 67 comporte le protocole d'authentification EAP.

L'application USIM 65 est le logiciel de base de la carte USIM 24 destiné à commander, par l'intermédiaire du système d'exploitation, l'exécution des applications, AP1, AP2 de la carte USIM.

La mémoire 62 de données est une mémoire non volatile EEPROM qui comporte notamment :
- toutes les données caractérisant l'abonnement du porteur des cartes telles qu'une identité qui doit identifier sans aucune ambiguïté l'abonné (l'IMSI), les détails de l'abonnement,
- des codes secrets ou des clés d'authentification tels que la clé secrète Ki de 128 bits attribuée lors de la souscription de l'abonnement, les clés de cryptage CK et d'intégrité IK, permettant d'authentifier l'utilisateur et de s'authentifier vis-à-vis du réseau et vice versa,
- des codes secrets PIN, PIN2, PUK (Personal Unlocking Key).

A chaque abonné est attribuée une clé Ki propre. Les algorithmes d'authentification, de détermination de clé et de chiffrement/déchiffrement sont quant à eux les mêmes pour tous les abonnés d'un même réseau.

La mémoire de traitement 62 des données est une mémoire RAM utilisée par le système d'exploitation notamment durant les échanges entre la carte et le terminal 20 ou le modem 22 qui l'accueille.

La représentation des mémoires de la carte USIM 24 n'est qu'une illustration d'implantation de composants et d'enregistrement de données. Dans la pratique, ces mémoires sont unifiées ou distribuées selon des contraintes de taille de la base de données et/ou de rapidité des traitements souhaités.

La figure 7 montre une représentation schématique d'une architecture du modem 22. Le modem 22 comporte des circuits électroniques 64 connectés à l'antenne 23 permettant d'assurer l'interface radio entre le modem 22 et le réseau mobile 81.

Le modem 22 comporte un microprocesseur 70, une mémoire de programme 71 et une mémoire de données 72 connectés à un bus bidirectionnel 73. La mémoire de programme 71 comporte une zone 74 comportant des codes instructions pour transmettre au destinataire (terminal ou carte USIM), sans traitement préalable, toute commande/réponse de type AT-CSIM.

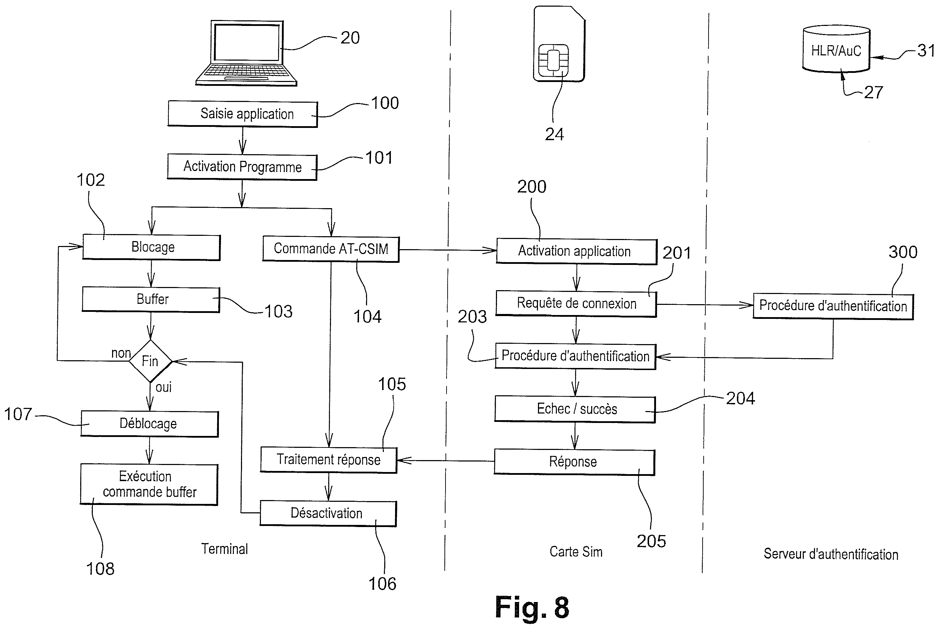

La figure 8 montre une illustration d'étapes de fonctionnement du procédé, selon un mode de réalisation de l'invention. La figure 8 montre une première étape préliminaire 100 dans laquelle l'unité de commande 40 du terminal 20 reçoit une requête de connexion au serveur d'applications 28, par l'intermédiaire du réseau sans fil. Cette requête correspond à une saisie et validation de l'application du serveur 28 d'applications sur l'interface de saisie du terminal 20.

A une étape 101, l'unité de commande 40 lance l'exécution du programme de l'ordonnancement de la communication avec la carte USIM. A une étape 102, le programme d'ordonnancement bloque l'exécution de toutes les communications/commandes avec la carte USIM, à l'exception de celles issues d'une session de dialogue déclenchée à une étape 104. A une étape 103, le programme permet d'enregistrer toutes les communications/commandes bloquées dans une mémoire temporaire, en attendant la fin de l'exécution de la session de dialogue par l'unité de commande 40.

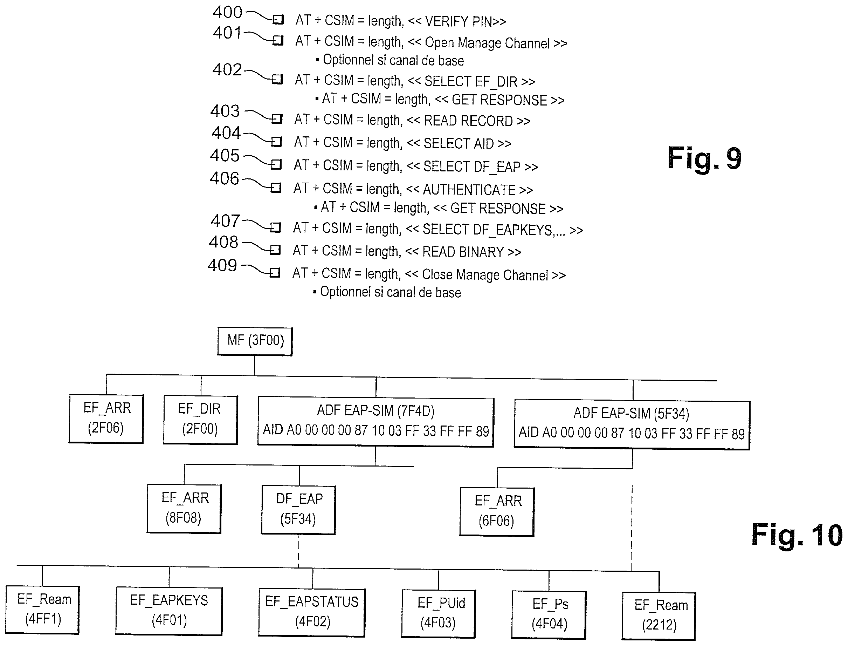

A l'étape 104, l'unité de commande déclenche la session de dialogue avec la carte USIM 24 afin d'accéder à l'application enregistrée dans ladite carte USIM et correspondant à l'application saisie par l'utilisateur. Cette session de dialogue est orchestrée du côté du terminal par le programme d'ordonnancement et du côté de la carte USIM par l'application AT-CSIM 66. Ce dialogue est basé sur des commandes/réponses ayant un attribut AT-CSIM. Un exemple de session de dialogue est représenté à la figure 9.

Les commandes AT, parfois appelées Commandes Hayes, constituent un langage de commandes développé à l'origine pour le modem Hayes Smartmodem 300. Ce jeu de commandes s'est ensuite retrouvé dans tous les modems fabriqués.

Dans l'invention, on a eu avantageusement l'idée d'utiliser les commandes de type AT-CSIM du groupe AT pour créer un protocole de communication entre le terminal 20 et la carte USIM 24, remplaçant celui du driver PC/SC. Ces commandes AT-CSIM correspondent aux instructions que le microprocesseur 60 de la carte USIM 24 doit charger dans son registre d'instructions. Ces commandes AT-CSIM sont spécifiées dans la norme 3GPP TS 27.007.

Ces commandes AT permettent par exemple, avec la carte USIM, de faire composer au terminal 20 un numéro de téléphone, de commander le raccordement du modem 22 à la ligne (l'équivalent de décrocher le téléphone), de connaître l'état de la ligne : tonalité d'invitation à transmettre, ligne occupée... , de spécifier le type de transmission et le protocole de liaison à utiliser, de régler le volume sonore du haut-parleur interne du modem, d'envoyer les caractères transmis simultanément vers l'écran, d'afficher certains renseignements concernant la carte USIM, de manipuler les registres internes de la carte USIM. Ces commandes sont utilisées par le logiciel de pilotage du modem 3G pour faire exécuter à la carte USIM 24 les demandes de l'utilisateur correspondantes.

Dans l'invention, les commandes AT-CSIM sont des commandes que le terminal 20 envoie directement à la carte USIM 24, lorsqu'une requête de connexion à un serveur d'applications via le réseau 80 sans fil est saisie et validée par l'utilisateur.

Chaque commande AT-CSIM est envoyée à la carte USIM 24 sous la forme d'une ligne de texte encodé en ASCII, terminée par le caractère \r seul (code ASCII 13). La carte USIM 24 retourne une réponse sous la forme d'une ou plusieurs lignes selon la commande envoyée, chaque ligne se terminant par les caractères \r suivi de \n (codes ASCII 13 et 10).

La syntaxe de la commande AT-CSIM est définie par la norme 3GPP TS 27.007. La commande AT-CSIM est sous la forme suivante : AT+ CSIM=<taille/length>, <commande>
où <taille/length> : est le double de la taille de la commande,
<commande> : la commande est en hexadécimal dans un format décrit par la norme GSM 51.011 qui s'appuie sur ETSI 102.221.

La carte USIM 24 émet une réponse à la commande AT-CSIM à destination du terminal 20. La syntaxe de la réponse est définie par la norme 3GPP TS 27.007. La réponse est sous la forme suivante : AT+ CSIM=<taille/length>, <réponse>
où <taille> : est le double de la taille de la réponse,
<réponse> : la réponse est en hexadécimal dans un format décrit par la norme GSM 51.011 qui s'appuie sur ETSI 102.221.

A une étape 200, au niveau de la carte USIM 24, par le biais de la session de dialogue de l'étape 104, le microprocesseur 60 accède à l'adresse de l'application du serveur d'applications 28 enregistrée dans la mémoire de la carte.

A une étape 201, une requête de certificat de connexion au serveur d'applications 28 est transmise par la carte USIM 24 au réseau sans fil 80. A une étape 203 au niveau de la carte USIM 24 et une étape 300 au niveau du réseau 80, une procédure d'authentification est déclenchée sur le réseau sans fil 80 pour identifier la carte USIM. Les communications entre les serveurs HLR 27 et AUC 31 du réseau et la carte USIM 24 transitent par un accès autorisé ouvert de la borne 30 d'accès.

La procédure d'authentification est effectuée selon le protocole EAP de l'application EAP-SIM 67 de la carte USIM.

La figure 12 montre une représentation schématique de cette procédure d'authentification de type EAP-SIM.

La communication entre la carte USIM 24 et le serveur d'authentification 32 par l'intermédiaire de la borne 30 d'accès s'effectue par l'intermédiaire du terminal 20 qui :
- reçoit de la borne d'accès 30 des requêtes à destination de la carte USIM 24,
- émet une commande AT-CSIM à destination de la carte USIM 24 en fonction des requêtes reçues de la borne d'accès 30,
- reçoit de la carte SIM des réponses AT-CSIM à destination du serveur d'authentification 32,
- émet une requête à destination du serveur d'authentification 32 en fonction des réponses reçues de la carte USIM 24.Tant que la carte USIM 24 n'est pas authentifiée, elle ne peut pas avoir accès au réseau sans fil 80, seuls les échanges liés au processus d'authentification sont relayés vers le serveur d'authentification 32 par la borne d'accès 30. Une fois authentifiée, la borne d'accès 30 laisse passer le trafic lié au terminal 20. Le processus d'authentification se déroule entre la carte USIM 24 et le serveur d'authentification 32, la borne d'accès 30 se comportant comme un relais entre ces deux entités.

La figure 12 montre une étape préliminaire 210 correspondant à l'association physique du terminal 20 avec la borne d'accès 30 (équivalent au branchement d'un câble reliant le port d'un commutateur à l'équipement à authentifier). Le processus d'authentification est ensuite initié par l'envoi d'une requête d'identification, à une étape 211, provenant de la borne d'accès 30 vers la carte USIM 24 par l'intermédiaire du terminal 20.

La carte USIM 24 répond en transmettant à la borne 30, à une étape 212 de la figure 13, un message initial comportant son identité IMSI. La borne 30 transmet ensuite le message initial reçu de la carte USIM 24 au serveur d'authentification 32, à une étape 213.

À partir de ce moment, les échanges entre la carte USIM 24 et le serveur d'authentification 32 dépendent de la méthode d'authentification choisie qui est ici l'EAP-SIM.

Le serveur d'authentification 32 émet une requête d'authentification de l'IMSI à une étape 214, à destination du serveur HLR 27.

A une étape 215, le centre d'authentification AUC 31 génère cinq vecteurs d'authentification dont un premier nombre aléatoire RAND de, par exemple, 16 octets, un second nombre aléatoire AUTN pour (AUthentication TokeN), un paramètre XRES calculé à l'aide d'un algorithme d'authentification, la clé Ki mémorisée dans le centre d'authentification AUC 31 en correspondance avec l'IMSI de l'abonné, une clé de chiffrement CK et une clé d'intégrité IK. Le serveur HLR 27 transforme ces cinq vecteurs d'authentification en trois vecteurs d'authentification dont un nombre aléatoire RAND, le paramètre SRES' de quatre octets et une clé de chiffrement Kc de huit octets.

A une étape 216, le centre d'authentification AUC 31 transmet les trois vecteurs d'authentification au serveur d'authentification 32. A une étape 217, le serveur d'authentification 32 émet une requête d'authentification et de cryptage à la carte USIM 24 comportant la donnée aléatoire RAND, par l'intermédiaire de la borne 30.

A une étape 218, la carte USIM 24 calcule au moyen d'un algorithme d'authentification un résultat fonction de la clé Ki et du nombre aléatoire RAND. Ce résultat est retourné au serveur d'authentification 32, par l'intermédiaire de la borne d'accès 30, sous la forme d'une réponse signée SRES (Signed RESponse), à une étape 219.

A une étape 220, le serveur d'authentification 32 compare le paramètre SRES' au résultat SRES. Si le résultat de réponse SRES correspond au paramètre SRES', la connexion au serveur 28 d'applications est acceptée, à une étape 220.

A la fin du processus d'authentification une clé unicast de 512 bits (ou clé maître MSK) est calculée par la carte USIM 24, à l'étape 221, et par le serveur d'authentification 32, à l'étape 222. A partir de cette clé MSK, la carte USIM 24 et le serveur d'authentification 32 en déduisent un certificat de session PMK (Pairwise Master Key).

A une étape 223, le serveur d'authentification 32 transmet le certificat de session PMK à la borne d'accès 30 qui la transmet à la carte USIM 24, à une étape 224.

Dans un mode de réalisation, lorsque le serveur d'applications 28 comporte des données cryptées, on peut dériver une clef de cryptage pour ces données à partir du certificat de session obtenu.

Les informations transmises au cours de la procédure d'authentification entre la carte USIM 24 et le serveur d'authentification 32 sont confidentielles. Cette confidentialité des données permet d'interdire l'interception et le décodage des informations par des entités non autorisées. Elle sert plus particulièrement à protéger les éléments suivants l'identité de l'abonné telle que l'IMSI. Cette confidentialité est obtenue grâce au chiffrement des données.

Les informations transmises sur les canaux dédiés sont chiffrées grâce à un algorithme de codage/décodage à partir de la clé Kc calculée, à une étape 225 au niveau de la Carte USIM 24 et sélectionnée, à une étape 226, au niveau du serveur d'authentification 24 à partir des trois vecteurs reçus.

A l'étape 225, la clé Kc est calculée en fonction du nombre aléatoire RAND, de la clé Ki et d'un algorithme de chiffrement.

Au cours de cet échange entre le serveur d'authentification et la carte USIM 24 par l'intermédiaire du terminal 20, la borne d'accès 32 reçoit des messages cryptés avec la clé Kc que seule l'application EAP 66 de la carte USIM et du serveur 32 peut déchiffrer.

L'utilisation de ces différents éléments pour la mise en oeuvre des fonctions de sécurité permet au réseau de vérifier, de manière sûre, l'identité d'un utilisateur.

A une étape 204 de la figure 8, le résultat de réponse SRES' correspond à la réponse signée SRES, la demande d'authentification de l'abonné est satisfaite et un certificat de session PMK est créé et enregistré dans la mémoire de la carte USIM.

Ce certificat de session est un code d'authentification pouvant être des identifiants et mots de passe, une clé de chiffrement, une clé de certificat ou autres...

Dans le cas contraire, la demande d'authentification échoue et l'abonné ne peut utiliser son terminal 20 pour se connecter au serveur 28 d'applications via le réseau sans fil 80.

A une étape 205, la carte USIM 24 élabore une réponse AT-CSIM en fonction du résultat de l'étape 204. Puis, elle transmet au terminal 20 par l'intermédiaire du modem 22, la réponse élaborée.

A une étape 105, le terminal 20 traite la réponse reçue et transmet le certificat de session contenue dans la réponse au serveur d'applications 28 par l'intermédiaire de la borne d'accès 30 en cas de réponse positive. A une étape 106, le terminal 20 arrête l'exécution du programme de l'ordonnancement de communication. A une étape 107, le terminal 20 désactive le blocage des commandes à destination de la carte USIM et exécute les commandes enregistrées dans la mémoire tampon à une étape 108.

La figure 9 montre un exemple d'une session de dialogue entre le terminal 20 et la carte USIM 24. La figure 10 montre une représentation schématique d'une hiérarchisation des répertoires enregistrés dans la carte USIM 24, selon la norme TS 102 310.

A une étape 400, le terminal 20 initie la session de dialogue en envoyant une commande AT-CSIM de vérification du code PIN enregistré dans la mémoire de la carte USIM 24. La carte USIM 24 transmet au terminal 20 une réponse à cette commande.

Lorsque la réponse est positive, le terminal 20 peut élaborer et transmettre à la carte USIM 24 une commande d'ouverture de canal, à une étape 401. Dans une variante, cette commande est optionnelle lorsque la communication avec la carte USIM 24 s'effectue sur un canal principal par défaut.

Comme le montre la figure 10, à l'ouverture du canal, le terminal 20 a accès au répertoire du fichier principal MF de la mémoire de la carte USIM 24. Ce fichier principal 420 comporte des enregistrements qui contiennent les données essentielles à une application particulière. Il sert de référence principale pour une application déterminée et est relativement permanent, bien que son contenu puisse varier.

Comme spécifié dans la norme ETSI TS 102 221, le fichier principal MF comporte quatre répertoires EF_{ICCID}; EF_{DIR}, EF_{PL} et EF_{ARR}. Le répertoire EF_{DIR} intéressant le plus l'invention comporte l'adresse des applications ou Application Identifiers (AIDs) en anglais et le label des applications présentes sur la carte USIM 24. Un label est un nom, groupe de caractères ou symbole attribué à une instruction, un sous-programme ou une fonction et servant à l'identifier tout au long d'un programme. Le fonctionnement et la syntaxe des adresses AID des applications est défini par la norme ETSI TS 101 220. Une application ne peut être sélectionnée que par l'intermédiaire de son adresse AID.

Après l'activation de la carte USIM par l'initialisation avec la vérification du code PIN, à l'étape 400, le fichier principal MF est implicitement sélectionné et devient le répertoire courant. Chaque répertoire du fichier principal MF peut être sélectionné en utilisant la commande « SELECT ».

A une étape 402, le terminal 20 élabore et transmet à la carte USIM 24 une commande de sélection du répertoire EF_DIR. La lecture du fichier EF_DIR (Fid = 2F00) permet de lister toutes les applications AID disponibles de la carte USIM 24.

La carte USIM 24 transmet au terminal 20 une réponse à cette commande. La réponse peut être par exemple [61 24] qui signifie qu'au code 61 il existe 24 octets correspondant à l'application. Immédiatement après l'envoi de cette commande, le terminal 20 transmet la commande « GET RESPONSE » pour obtenir les 24 octets. La carte USIM 24 transmet une réponse comportant les 24 octets structurés selon un fichier de format Tag-Length-Value (format TLV). Chaque élément de données se compose par conséquent d'un identificateur (Tag), de sa longueur en octets (Length) et de sa valeur (Value) comportant les données. Le tag est une valeur constante, de 1 octet, indiquant que c'est une commande.

A une étape 403, le terminal 20 élabore et transmet à la carte USIM 24 une commande de lecture de l'enregistrement du fichier à lire. A réception de cette commande, la carte USIM 24 se positionne au niveau de l'enregistrement du tag correspondant à l'information recherchée. Puis elle lit l'adresse de l'application enregistrée.

A une étape 404, le terminal 20 élabore et transmet à la carte USIM 24 une commande de positionnement à l'adresse de l'application lue. A réception de cette commande, la carte USIM 24 recherche l'enregistrement à lire et se positionne au niveau de l'adresse de l'application.

A une étape 405, le terminal 20 élabore et transmet à la carte USIM 24 une commande de positionnement à l'application EAP-SIM 67 puis à l'adresse DF_EAP de la zone mémoire comportant les données secrètes de la carte USIM 24.

A une étape 406, le terminal 20 élabore et transmet à la carte USIM 24 une commande d'authentification de la carte USIM 24. Une procédure d'authentification est initiée entre la carte USIM et le réseau conformément à la description de la figure 12. A la fin de l'authentification, un certificat de session, correspondant par exemple à un mot de passe à usage unique, est généré et enregistré dans le répertoire EF_EAPKEYS.

A une étape 407, le terminal 20 élabore et transmet à la carte USIM 24 une commande de récupération de certificat de session. A réception de cette commande, la carte USIM 24 se positionne au niveau du répertoire EF_EAPKEYS.

A une étape 408, le terminal 20 élabore et transmet à la carte USIM 24 une commande de lecture du certificat de session. A réception de cette commande, la carte USIM 24 lit le certificat de session du répertoire EF_EAPKEYS et le transmet au terminal 20.

A une étape 409, le terminal 20 élabore et transmet à la carte USIM 24 une commande de fermeture du canal de données ouvert à l'étape 401.

L'invention a été testée sur plusieurs modems 3G de l'état de la technique munis d'une carte USIM. Pour ce faire, l'application AT-CSIM est téléchargée dans l'application USIM de chaque carte USIM de chaque modem.

Pour chaque modem 3G testé, la session de dialogue est exécutée d'abord sur le canal principal, référencé canal 00, de communication de l'application USIM avec le modem 20 puis sur un canal secondaire, référencé canal 01. Le canal 00 est le canal par défaut que s'octroie l'application USIM pour communiquer. Le canal 01 est un canal logique.

Dans un premier type de modems 3G testés, l'application EAP-SIM est distincte de celle de l'USIM. Dans ce cas, il est apparu qu'il est impossible pour aucun des modems testés de sélectionner l'ADF EAP-SIM sur le canal 00. En effet, cette sélection reviendrait à «désélectionner» l'ADF USIM qui est initialisée par défaut sur le canal 00, ce qui est impossible. En revanche on pouvait sélectionner cet ADF EAP-SIM sur le canal 01 pour la plupart des modems.

En conclusion, sur tous les modèles de modem 3G testés, la commande d'ouverture de canal optionnelle de l'étape 401 de la figure 9 est inapplicable, lorsque le canal 00 est utilisé et que l'application ADF EAP-SIM est distincte de l'ADF USIM. Avec ces modèles et cette architecture, seul le canal 01 peut être utilisé pour communiquer avec l'application EAP-SIM 67 de la carte USIM 24.

Dans un second type de modems 3G testés, l'application EAP-SIM est gérée par l'application USIM. Dans ce cas, l'application EAP-SIM est un fichier DF dans l'application ADF USIM. Dans ce cas, il est apparu que l'ADF EAP-SIM peut être sélectionné sur le canal de base 00, mais pas sur le canal 01 pour certains modems. Toutefois, ce type d'implémentation présente des risques importants de conflit avec certaines autres applications de l'application USIM. Lorsqu'au moins deux applications de l'application USIM sont simultanément en cours d'exécution, le risque de conflit d'applications est très élevé. En effet, le système d'exploitation de la carte USIM permet de gérer les commandes émises par le terminal 20 les unes à la suite des autres, dès leur réception.

De ce fait, le résultat du fonctionnement de l'application AT-CSIM et de celle de EAP-SIM dans l'application USIM est très aléatoire. En effet, comme décrit dans la norme ETSI TS 102.221, la commande « GET RESPONSE » est utilisée pour transmettre les réponses de la carte au terminal 20, qui ne pouvaient pas autrement être transférées selon le protocole.

Les données de réponse transmises dépendent uniquement de la commande précédente quel que soit le canal par lequel la commande a été émise. De ce fait, si une commande suivante est émise par le terminal entre une commande précédente et sa réponse, la commande GET RESPONSE ne fournira que la réponse à la commande suivante. Par conséquent, dans l'exemple de la figure 9, si une commande de la session de dialogue est émise par le terminal 20 à la carte 24 après la commande « AUTHENTICATE », la commande GET RESPONSE ne fournira pas le certificat de session permettant à la session de dialogue de se poursuivre.

Ainsi, dans une session de dialogue, si l'ordre des paires commandes/réponses n'est pas respecté, la carte enverra des informations de statut du type "problème technique ou aucun diagnostic précis".

Pour résoudre ces inconvénients, dans l'invention l'application AT-CSIM 66 d'ordonnancement de la communication et l'application EAP-SIM 67 sont téléchargées au même niveau hiérarchique que l'application USIM, autrement dit, elles sont distinctes les unes des autres. De ce fait, l'application AT-CSIM et l'application EAP-SIM s'exécute en parallèle de celle de l'application USIM. Ce type de hiérarchisation est illustré à la figure 6.

Le fait de séparer ces trois applications permet de mettre en place un programme d'ordonnancement de la communication entre la carte USIM et le terminal 20. Ce programme est un algorithme de type Mutex (en anglais Mutual exclusion, Exclusion mutuelle). Ce mutex est un protocole d'ordonnancement destiné à éviter que des ressources de la carte USIM partagées par plusieurs applications ne soient utilisées en même temps. Cet algorithme Mutex permet de réguler l'accès aux données de la carte USIM, pour que l'application AT-CSIM 66 et l'application EAP-SIM 67 ne soient les seules qui puissent être exécutées. Cet algorithme Mutex utilise un état pour commander l'exécution de l'application AT CSIM, tant que cet état est utilisé la carte USIM est considérée comme occupée pour toutes les autres commandes. Dès que cet état n'est plus utilisé, l'algorithme considère que l'application AT-CSIM est terminée.

Le résultat de ces tests a permis de conditionner la structure de l'application EAP-SIM dans la carte SIM et la gestion des canaux applicatifs à faire sur la carte 24.

En outre, le fait de bloquer temporairement les commandes AT utilisés par l'application USIM 65 pour son fonctionnement standard en privilégiant les commandes AT-CSIM nécessaires à l'application EAP-SIM 67, conformément à l'invention, permet d'éviter d'éventuels dysfonctionnement et perturbation dans la session de dialogue. En outre ce blocage ne dure que quelques millisecondes pour influer sur le fonctionnement de l'application USIM gestionnaire de la connectivité au réseau mobile 3G ou pour gêner l'utilisateur.

Or, dans le cadre du driver PC/SC, une application indépendante fonctionnant sur le driver PC/SC pourrait être perturbée par le logiciel de gestion de la connectivité 3G du modem 3G.

En conclusion, lors de la mise sous tension par le terminal 20, une session USIM est initialisée. Sous une session USIM on peut sélectionner une application ADF (Application Dedicated File) parmi celles présentes sur la carte USIM 24. L'application ADF sélectionnée par défaut à l'initialisation est celle de l'USIM qui utilise le canal 00. Pour éviter tout conflit avec l'application USIM, les applications AT-CSIM et EAP-SIM utilisent un autre canal que celui de base (00). Ces autres canaux peuvent être les canaux logiques 01, 02 ou 03.

Le programme d'ordonnancement téléchargé dans le terminal et l'application AT-CSIM de la carte USIM permettent de résoudre le problème de la commande GET RESPONSE, ci-dessus décrit.

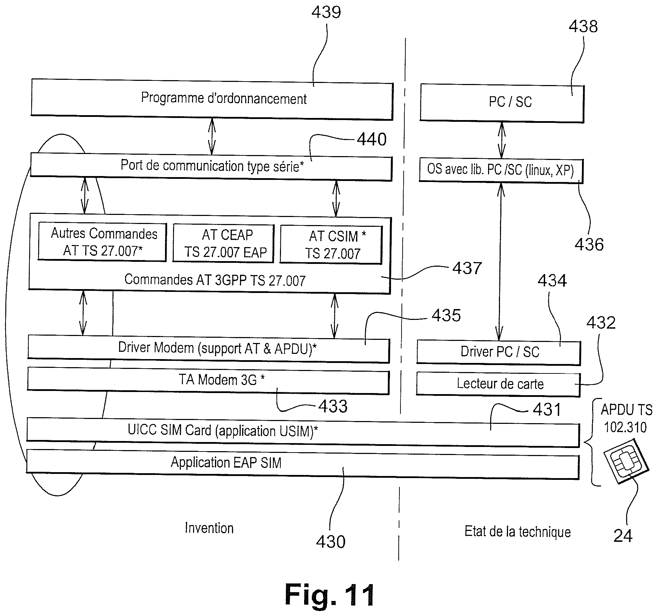

La figure 11 montre une représentation schématique d'une comparaison entre les moyens mis en oeuvre dans l'invention et ceux utilisant le protocole EAP-SIM à l'aide d'un lecteur PC/SC de l'état de la technique.

Comme le montre le bloc 430, l'invention et l'état de la technique sont deux modes de réalisation comportant l'application EAP-SIM. Le bloc 431 montre que ces deux modes de réalisation comparées comportent une carte USIM 24.

Le mode de réalisation de l'état de la technique comporte, comme le montre le bloc 432, un lecteur de carte spécifique propriétaire. Par contre, le mode de réalisation de l'invention comporte, comme le montre le bloc 433, un terminal adaptateur qui est un équipement normalisé de lecture de carte.

Le mode de réalisation de l'état de la technique comporte, comme le montre le bloc 434, un pilote PC/SC spécifique propriétaire servant d'interface entre la carte et le terminal. Or, le mode de réalisation de l'invention comporte, comme le montre le bloc 435, un pilote normalisé selon la norme 3GPP qui permet au terminal de communiquer avec la carte.

Le mode de réalisation de l'état de la technique comporte, au bloc 436, un système d'exploitation destiné à commander l'exécution du programme PC/SC du bloc 438 en assurant la gestion des travaux, les opérations d'entrée-sortie sur la carte USIM, l'affectation des ressources aux différents processus, l'accès aux bibliothèques de programmes et aux fichiers, ainsi que la comptabilité des travaux.

L'invention remplace ce bloc 436 par des commandes AT-CSIM du bloc 437 qui permettent une communication entre le terminal et la carte USIM selon la norme 3GPP TS 27.007.

La communication entre le terminal et la carte USIM s'effectue à l'aide de commandes/réponses comportant un attribut AT-CSIM tel que défini par la norme 3GPP TS 27.007, comme le montre le bloc 437.

Le bloc 439 est une interface logicielle téléchargée dans le terminal et dans la carte USIM qui permet d'ordonnancer le traitement des commandes/réponses AT-CSIM au niveau du terminal et de la carte USIM. L'interface logicielle du terminal 20 et celle de la carte USIM 24 sont reliées par une liaison série comme le montre le bloc 440.

L'invention permet ainsi, contrairement au mode de réalisation de l'état de la technique, d'assurer une compatibilité avec n'importe quel modem 3GPP existant et à venir compatible avec la norme 3GPP.

L'invention permet ainsi la mise en oeuvre d'une méthode d'authentification :
- fiable, c'est-à-dire comportant un login et un mot de passe complexe, non connus de l'utilisateur et interdisant tout échange de mot de passe entre utilisateurs,
- transparente, c'est-à-dire sans saisie par l'utilisateur d'un login ou d'un mot de passe, afin de proposer un parcours client similaire à celui d'une utilisation en présence d'un réseau 3G,
- portable sans distinction de système d'exploitation, c'est-à-dire pouvant être utilisée sous les différents terminaux existants, compatible avec les différents réseaux Wi-Fi disponibles.

## Revendications

1. Procédé d'authentification sécurisée d'un terminal (20) itinérant dans lequel :
- le terminal est capable d'entrer en relation avec un réseau de télécommunications mobiles (81) par l'intermédiaire d'un modem (22) de télécommunications mobiles muni d'une carte USIM (24),
- le terminal entre en relation avec un serveur d'applications (28), d'un réseau de télécommunications sans fil (80) par l'intermédiaire d'une borne (30) d'accès sans fil, à l'issue d'une procédure d'authentification de la carte USIM par un serveur d'authentification (32) selon un protocole d'authentification EAP,
**caractérisé en ce que**, lors de la procédure d'authentification, une session de dialogue est initiée (104) entre le terminal et la carte USIM, selon un protocole de communication sécurisée avec des commandes et réponses comportant une première séquence prédéterminée de type AT+CSIM ;
**en ce qu'**une application AT-CSIM (66) d'ordonnancement de la communication et une application EAP-SIM (67) sont téléchargées au même niveau hiérarchique que l'application USIM, lesdites applications étant distinctes les unes des autres et l'application AT-CSIM et l'application EAP-SIM s'exécutant en parallèle de celle de l'application USIM ;
**en ce qu'**un programme d'ordonnancement de la communication entre la carte USIM et le terminal (20) est installé sur le terminal ledit programme étant un algorithme d'exclusion mutuelle Mutex (« *Mutual exclusion »*) et étant un protocole d'ordonnancement destiné à éviter que des ressources de la carte USIM partagées par plusieurs applications ne soient utilisées en même temps, ledit programme permettant de réguler l'accès aux données de la carte USIM, pour que l'application AT-CSIM (66) et l'application EAP-SIM (67) ne soient les seules qui puissent être exécutées, ledit programme utilisant un état pour commander l'exécution de l'application AT CSIM, **en ce que** tant que cet état est utilisé, ladite carte USIM est considérée comme occupée pour toutes les autres commandes, et **en ce que** dès que cet état n'est plus utilisé, ledit programme considère que l'application AT-CSIM est terminée ; **en ce que** le ledit programme permet de bloquer temporairement les commandes AT utilisées par l'application USIM (65) pour son fonctionnement standard en privilégiant les commandes AT-CSIM nécessaires à l'application EAP-SIM (67), et permet d'éviter d'éventuels dysfonctionnement et perturbation dans la session de dialogue, ledit blocage ne durant que quelques millisecondes pour influer sur le fonctionnement de l'application USIM gestionnaire de la connectivité au réseau mobile; **en ce que**, lors de la mise sous tension par le terminal (20), une session USIM est initialisée, **en ce que** sous une session USIM, une application Applicaton Dedicated File, ADF, parmi celles présentes sur la carte USIM (24), est sélectionnée par défaut à l'initialisation, ladite application ADF étant celle de l'USIM qui utilise le canal 00,
et **en ce que** pour éviter tout conflit avec l'application USIM, les applications AT-CSIM et EAP-SIM utilisent un autre canal que celui de base 00 ces autres canaux pouvant être les canaux logiques 01, 02 ou 03.

2. Procédé selon la revendication précédente, **caractérisé en ce que** la production et l'émission des commandes et des réponses, par respectivement le terminal et la carte USIM, sont ordonnancées selon une séquence adéquate préalablement définie par l'intermédiaire d'une application (47, 66) d'ordonnancement AT-CSIM.

3. Procédé selon la revendication précédente, **caractérisé en ce que** l'application d'ordonnancement AT-CSIM de la carte USIM est distincte d'une application USIM (65).

4. Procédé selon la revendication précédente, **caractérisé en ce que** la carte USIM comporte une application (67) comprenant un protocole EAP-SIM ou EAP AKA distincte de l'application USIM et de l'application d'ordonnancement AT-CSIM.

5. Procédé selon la revendication précédente, **caractérisé en ce que** lors de la procédure d'authentification :
- le serveur d'authentification génère des vecteurs d'authentification,
- ledit serveur émet un message de challenge à partir desdits vecteurs à destination de la carte USIM,
- la carte USIM calcule une réponse au message challenge en fonction des vecteurs d'authentification et des données secrètes enregistrées au préalable dans la carte,
- on crée un certificat de session en réponse à la requête de connexion autorisant l'accès du terminal au serveur d'applications par l'intermédiaire de la borne.

6. Procédé selon la revendication précédente, **caractérisé en ce que** les vecteurs d'authentification comportent un nombre aléatoire RAND, un paramètre SRES' calculé à l'aide d'un algorithme d'authentification, une clé secrète Ki de la carte USIM, une clé de chiffrement Kc.

7. Procédé selon l'une des revendications précédentes, **caractérisé en ce que** lors de la procédure d'authentification, la communication entre la carte USIM et le serveur d'authentification s'effectue par l'intermédiaire du terminal.

8. Procédé selon l'une des revendications précédentes, **caractérisé en ce que** lors d'une session de dialogue entre le terminal et la carte USIM, on enregistre dans une mémoire temporaire toutes commandes à destination de la carte autres que celles de la session de dialogue.

9. Procédé selon la revendication précédente, **caractérisé en ce que** les commandes enregistrées dans la mémoire temporaire sont traitées à la fin de la session de dialogue selon un ordre première enregistrée, première exécutée.

10. Procédé selon l'une des revendications précédentes, **caractérisé en ce que** le terminal produit les commandes AT-CSIM directement exécutable par la carte USIM, sans codage/décodage par le modem.

11. Procédé selon l'une des revendications précédentes, **caractérisé en ce que** le serveur d'applications est notamment un serveur de connexion à Internet via le réseau sans fil, un serveur de télévision, un serveur de localisation géographique du terminal ou un serveur de télévision cryptée.

12. Terminal (20) portatif de type ordinateur personnel connecté à un modem (22) dans lequel une carte USIM (24) est insérée, **caractérisé en ce qu'**il comporte des moyens configurés de sorte à exécuter une application d'ordonnancement AT-CSIM (47) d'une session de dialogue avec la carte USIM (24) dudit modem (22) de télécommunications mobiles afin d'authentifier ladite carte sur un réseau (80) sans fil via une borne d'accès (30), **en ce qu'**une application AT-CSIM (66) d'ordonnancement de la communication et une application EAP-SIM (67) sont téléchargées au même niveau hiérarchique que l'application USIM, lesdites applications étant distinctes les unes des autres et l'application AT-CSIM et l'application EAP-SIM s'exécutant en parallèle de celle de l'application USIM ;
**en ce qu'**un programme d'ordonnancement de la communication entre la carte USIM et le terminal (20) est est installé sur le terminal ledit programme étant un algorithme de type exclusion mutuelle Mutex (« *Mutual exclusion* ») et étant un protocole d'ordonnancement destiné à éviter que des ressources de la carte USIM partagées par plusieurs applications ne soient utilisées en même temps, ledit programme permettant de réguler l'accès aux données de la carte USIM, pour que l'application AT-CSIM (66) et l'application EAP-SIM (67) ne soient les seules qui puissent être exécutées, ledit programme utilisant un état pour commander l'exécution de l'application AT CSIM, **en ce que** tant que cet état est utilisé, ladite carte USIM est considérée comme occupée pour toutes les autres commandes, et **en ce que** dès que cet état n'est plus utilisé, ledit programme considère que l'application AT-CSIM est terminée ; **en ce que** le ledit programme permet de bloquer temporairement les commandes AT utilisées par l'application USIM (65) pour son fonctionnement standard en privilégiant les commandes AT-CSIM nécessaires à l'application EAP-SIM (67), et permet d'éviter d'éventuels dysfonctionnement et perturbation dans la session de dialogue, ledit blocage ne durant que quelques millisecondes pour influer sur le fonctionnement de l'application USIM gestionnaire de la connectivité au réseau mobile **en ce que**, lors de la mise sous tension par le terminal (20), une session USIM est initialisée, **en ce que** sous une session USIM, une application Application Dedicated File, ADF, parmi celles présentes sur la carte USIM (24), est sélectionnée par défaut à l'initialisation, ladite application ADF étant celle de l'USIM qui utilise le canal 00,
et **en ce que** pour éviter tout conflit avec l'application USIM, les applications AT-CSIM et EAP-SIM utilisent un autre canal que celui de base 00 ces autres canaux pouvant être les canaux logiques 01, 02 ou 03.

## Patentansprüche

1. Verfahren zur sicheren Authentifizierung eines Endgeräts (20) beim Roaming, wobei:
- das Endgerät dazu geeignet ist, über ein Modem (22) für die mobile Telekommunikation, das mit einer USIM-Karte (24) ausgestattet ist, mit einem Netz (81) für mobile Telekommunikation in Kontakt zu treten,
- das Endgerät nach Abschluss eines Authentifizierungsverfahrens der USIM-Karte mit einem Authentifizierungsserver (32) gemäß einem EAP-Authentifizierungsprotokoll über einen drahtlosen Zugangsanschluss (30) mit einem Anwendungsserver (28) eines drahtlosen Telekommunikationsnetzes (80) in Kontakt tritt,
**dadurch gekennzeichnet, dass** beim Authentifizierungsverfahren eine Dialogsitzung zwischen dem Endgerät und der USIM-Karte gemäß einem Kommunikationsprotokoll initiiert (104) wird, das durch Befehle und Antworten gesichert ist, die eine erste vorbestimmte Sequenz des Typs AT+CSIM aufweisen;
dass eine AT-CSIM-Kommunikationsablaufsteuerungsanwendung (66) und eine EAP-SIM-Anwendung (67) auf dieselbe Hierarchieebene wie die USIM-Anwendung heruntergeladen werden, wobei die Anwendungen sich voneinander unterscheiden und die AT-CSIM-Anwendung und die EAP-SIM-Anwendung parallel zur USIM-Anwendung ausgeführt werden;
dass ein Kommunikationsablaufsteuerungsprogramm zwischen der USIM-Karte und dem Endgerät (20) auf dem Endgerät installiert ist, wobei das Programm ein Algorithmus eines wechselseitigen Ausschlusses Mutex ("*Mutual exclusion*") ist, und ein Ablaufsteuerungsprotokoll ist, das dazu bestimmt ist, zu verhindern, dass die von mehreren Anwendungen gemeinsam genutzten Ressourcen der USIM-Karte nicht gleichzeitig verwendet werden, wobei das Programm die Steuerung des Zugriffs auf die Daten der USIM-Karte ermöglicht, damit die AT-CSIM-Anwendung (66) und die EAP-SIM-Anwendung (67) nicht die einzigen sind, die ausgeführt werden können, das Programm einen Zustand zur Steuerung der Ausführung der AT-CSIM-Anwendung verwendet, dass, solange dieser Zustand verwendet wird, die USIM-Karte für alle anderen Befehle als besetzt angesehen wird, und dass, sobald dieser Zustand nicht mehr verwendet wird, das Programm die AT-CSIM-Anwendung als beendet ansieht;
dass das Programm eine temporäre Blockierung der AT-Befehle ermöglicht, die von der USIM-Anwendung (65) für ihren Standardbetrieb verwendet werden, indem es die für die EAP-SIM-Anwendung (67) erforderlichen AT-CSIM-Befehle privilegiert und die Vermeidung einer möglichen Funktionsstörung und Beeinträchtigung in der Dialogsitzung ermöglicht, wobei die Blockierung nur einige Millisekunden dauert, um die Funktionsweise der USIM-Anwendung zur Verwaltung der Anbindung an das Mobilfunknetz zu beeinflussen;
dass beim Einschalten durch das Endgerät (20) eine USIM-Sitzung initialisiert wird, dass innerhalb einer USIM-Sitzung eine Application-Dedicated-File- (ADF-)Anwendung von denjenigen, die auf der USIM-Karte (24) vorhanden sind, bei der Initialisierung standardmäßig ausgewählt wird, wobei es sich bei der ADF-Anwendung um diejenige des USIM handelt, die den Kanal 00 verwendet,
und dass zur Vermeidung eines jeglichen Konflikts mit der USIM-Anwendung die AT-CSIM- und die EAP-SIM-Anwendung einen anderen Kanal als denjenigen der Basis 00 verwenden, wobei diese anderen Kanäle die logischen Kanäle 01, 02 oder 03 sein können.

2. Verfahren nach dem vorstehenden Anspruch, **dadurch gekennzeichnet, dass** die Erzeugung und Aussendung von Befehlen und Antworten durch das Endgerät bzw. die USIM-Karte gemäß einer geeigneten, mittels einer AT-CSIM-Ablaufsteuerungsanwendung (47, 66) zuvor definierten Sequenz angewiesen werden.

3. Verfahren nach dem vorstehenden Anspruch, **dadurch gekennzeichnet, dass** die AT-CSIM-Ablaufsteuerungsanwendung der USIM-Karte von einer USIM-Anwendung (65) verschieden ist.

4. Verfahren nach dem vorstehenden Anspruch, **dadurch gekennzeichnet, dass** die USIM-Karte eine ein EAP-SIM- oder EAP-AKA-Protokoll umfassende Anwendung (67) aufweist, die von der USIM-Anwendung und der AT-CSIM-Ablaufsteuerungsanwendung verschieden ist.

5. Verfahren nach dem vorstehenden Anspruch, **dadurch gekennzeichnet, dass** beim Authentifizierungsverfahren:
- der Authentifizierungsserver Authentifizierungsvektoren erzeugt,
- der Server aus den Vektoren eine Challenge-Nachricht für die USIM-Karte ausgibt,
- die USIM-Karte eine Antwort auf die Challenge-Nachricht als Funktion der Authentifizierungsvektoren und von zuvor in der Karte abgespeicherten geheimen Daten berechnet,
- ein Sitzungszertifikat als Antwort auf die Verbindungsanforderung erzeugt wird, das den Zugriff des Endgeräts auf den Anwendungsserver über den Anschluss autorisiert.

6. Verfahren nach dem vorstehenden Anspruch, **dadurch gekennzeichnet, dass** die Authentifizierungsvektoren eine RAND-Zufallszahl, einen mittels eines Authentifizierungsalgorithmus berechneten SRES'-Parameter, einen geheimen Ki-Schlüssel der USIM-Karte, einen Kc-Chiffrierschlüssel aufweisen.

7. Verfahren nach einem der vorstehenden Ansprüche, **dadurch gekennzeichnet, dass** bei dem Authentifizierungsverfahren die Kommunikation zwischen der USIM-Karte und dem Authentifizierungsserver über das Endgerät erfolgt.

8. Verfahren nach einem der vorstehenden Ansprüche, **dadurch gekennzeichnet, dass** bei einer Dialogsitzung zwischen dem Endgerät und der USIM-Karte alle Befehle für die Karte, die von denen der Dialogsitzung verschieden sind, in einem temporären Speicher gespeichert werden.

9. Verfahren nach dem vorstehenden Anspruch, **dadurch gekennzeichnet, dass** die im temporären Speicher abgespeicherten Befehle am Ende der Dialogsitzung gemäß einer Reihenfolge "zuerst gespeichert - zuerst ausgeführt" behandelt werden.

10. Verfahren nach einem der vorstehenden Ansprüche, **dadurch gekennzeichnet, dass** das Endgerät von der USIM-Karte direkt ausführbare AT-CSIM-Befehle ohne Kodierung/Dekodierung durch das Modem erzeugt.

11. Verfahren nach einem der vorstehenden Ansprüche, **dadurch gekennzeichnet, dass** der Anwendungsserver insbesondere ein Server zur Verbindung mit dem Internet über das drahtlose Netz, ein TV-Server, ein Server zur geographischen Lokalisierung des Endgeräts oder ein verschlüsselter TV-Server ist.

12. Tragbares Endgerät (20) vom Personal-Computer-Typ, das an ein Modem (22) angeschlossen ist, in das eine USIM-Karte (24) eingeführt ist, **dadurch gekennzeichnet, dass** es Mittel aufweist, die so eingerichtet sind, dass sie eine AT-CSIM-Ablaufsteuerungsanwendung (47) einer Dialogsitzung mit der USIM-Karte (24) des Modems (22) für die mobile Telekommunikation ausführen, um die Karte in einem drahtlosen Netz (80) über einen Zugangsanschluss (30) zu authentifizieren,
dass eine AT-CSIM-Kommunikationsablaufsteuerungsanwendung (66) und eine EAP-SIM-Anwendung (67) auf dieselbe Hierarchieebene wie die USIM-Anwendung heruntergeladen werden, wobei die Anwendungen sich voneinander unterscheiden und die AT-CSIM-Anwendung und die EAP-SIM-Anwendung parallel zur USIM-Anwendung ausgeführt werden;
dass ein Kommunikationsablaufsteuerungsprogramm zwischen der USIM-Karte und dem Endgerät (20) auf dem Endgerät installiert ist, wobei das Programm ein Algorithmus vom Typ des wechselseitigen Ausschlusses Mutex ("*Mutual exclusion*") ist, und ein Ablaufsteuerungsprotokoll ist, das dazu bestimmt ist, zu verhindern, dass die von mehreren Anwendungen gemeinsam genutzten Ressourcen der USIM-Karte nicht gleichzeitig verwendet werden, wobei das Programm die Steuerung des Zugriffs auf die Daten der USIM-Karte ermöglicht, damit die AT-CSIM-Anwendung (66) und die EAP-SIM-Anwendung (67) nicht die einzigen sind, die ausgeführt werden können, das Programm einen Zustand zur Steuerung der Ausführung der AT-CSIM-Anwendung verwendet, dass, solange dieser Zustand verwendet wird, die USIM-Karte für alle anderen Befehle als besetzt angesehen wird, und dass, sobald dieser Zustand nicht mehr verwendet wird, das Programm die AT-CSIM-Anwendung als beendet ansieht;
dass das Programm eine temporäre Blockierung der AT-Befehle ermöglicht, die von der USIM-Anwendung (65) für ihren Standardbetrieb verwendet werden, indem es die für die EAP-SIM-Anwendung (67) erforderlichen AT-CSIM-Befehle privilegiert und die Vermeidung einer möglichen Funktionsstörung und Beeinträchtigung in der Dialogsitzung ermöglicht, wobei die Blockierung nur einige Millisekunden dauert, um die Funktionsweise der USIM-Anwendung zur Verwaltung der Anbindung an das Mobilfunknetz zu beeinflussen, dass beim Einschalten durch das Endgerät (20) eine USIM-Sitzung initialisiert wird, dass innerhalb einer USIM-Sitzung eine Application-Dedicated-File-(ADF-)Anwendung von denjenigen, die auf der USIM-Karte (24) vorhanden sind, bei der Initialisierung standardmäßig ausgewählt wird, wobei es sich bei der ADF-Anwendung um diejenige des USIM handelt, die den Kanal 00 verwendet,
und dass zur Vermeidung eines jeglichen Konflikts mit der USIM-Anwendung die AT-CSIM- und die EAP-SIM-Anwendung einen anderen Kanal als denjenigen der Basis 00 verwenden, wobei diese anderen Kanäle die logischen Kanäle 01, 02 oder 03 sein können.

## Claims

1. Method for securely authenticating a roaming terminal (20), wherein:
- the terminal is able to connect with a mobile telecommunications network (81) by means of a mobile telecommunications modem (22) comprising an USIM card (24),
- the terminal connects to an applications server (28), of a wireless telecommunications network (80), through a wireless access terminal (30), following an authentication procedure of the USIM card by an authentication server (32) according to an EAP authentication protocol,
**characterised in that**, during the authentication procedure, a dialog session is initiated (104) between the terminal and the USIM card, according to a communications protocol secured with controls and responses having a first predetermined sequence of the AT+CSIM type;
**in that** an AT-CSIM application (66) for the sequencing of the communication and an EAP-SIM application (67) are downloaded at the same hierarchical level as the USIM application, said applications being separate from one another and the AT-CSIM application and the EAP-SIM application executing in parallel to the USIM application;
**in that** a communication sequencing programme for the communication between the USIM card and the terminal (20) is installed on the terminal, said programme being a mutual exclusion algorithm Mutex ("Mutual Exclusion") and a sequencing protocol designed to prevent the resources of the USIM card, which are shared by multiple applications, from being used simultaneously, said programme allowing to regulate access to the USIM card data, so that the AT-CSIM application (66) and the EAP-SIM application (67) are the only ones that can be executed, said programme using a state to control the execution of the AT-CSIM application, **in that** so long as that state is used, the USIM card is considered as in use for all the other controls, and **in that** as soon as the state is no longer used, said programme considers that the AT-CSIM application is completed;
**in that** said programme allows to temporarily block the AT controls used by the USIM application (65) for its standard function by privileging the AT-CSIM controls required for the EAP-SIM application (67), and allows to avoid possible dysfunction and disruption during the dialog session, said blockage only lasting a few milliseconds to influence the function of the USIM application managing the connection to the mobile network;
**in that**, during powering up by the terminal (20), a USIM session is initialised, and **in that** in a USIM session, an Application Dedicated File, ADF, application, among those present on the USIM card (24), is selected by default during initialisation, said ADF application being the one used by the USIM on channel 00;
and **in that**, to prevent any conflict with the USIM application, the AT-CSIM and EAP-SIM applications use another channel than the base channel 00, these other channels can be logical channels 01, 02 or 03.

2. Method according to the preceding claim, **characterised in that** the production and issuing of controls and responses, respectively by the terminal and the USIM card, are sequenced according to an adequate and predefined sequence by means of an AT-CSIM sequencing application (47, 66).

3. Method according to the preceding claim, **characterised in that** the AT-CSIM sequencing application of the USIM card is separate from the USIM application (65).

4. Method according to the preceding claim, **characterised in that** the USIM card has an application (67) comprising an EAP-SIM or EAP AKA protocol separate from the USIM application and from the AT-CSIM sequencing application.

5. Method according to the preceding claim, **characterised in that** during the authentication procedure:
- the authentication server generates authentication vectors;
- said server issues challenge messages from said vectors to the USIM card,
- the USIM card calculates a response to the challenge message based on the authentication vectors and the secret data recorded beforehand on the card,
- a session certificate is created in response to the connection request authorising access from the terminal to the applications server through the terminal.

6. Method according to the preceding claim, **characterised in that** the authentication vectors have a random number RAND, a parameter SRES' calculated with an authentication algorithm, a secret key Ki of the USIM card, a deciphering key Kc.

7. Method according to any one of the preceding claims, **characterised in that** the authentication procedure, the communication between the USIM card and the authentication server, is achieved through the terminal.

8. Method according to any one of the preceding claims, **characterised in that** during a dialog session between the terminal and the USIM card, all the controls to the card other than those of the dialog session are recorded in a temporary memory.

9. Method according to the preceding claim, **characterised in that** the controls recorded in the temporary memory are processed upon completion of the dialog session according to the following order: first recorded, first executed.

10. Method according to any one of the preceding claims, **characterised in that** the terminal produces AT-CSIM controls that can be directly executed by the USIM card, without coding/decoding by the modem.

11. Method according to any one of the preceding claims, **characterised in that** the applications server is, in particular, a connection server to the internet through a wireless network, a television server, a geographic positioning server of a terminal, or an encoded television server.

12. Portable terminal (20), such as a personal computer, connected to a modem (22), wherein a USIM card (24) is inserted, **characterised in that** it has means configured so as to execute an AT-CSIM sequencing application (47) of a dialog session with the USIM card (24) of said mobile telecommunications modem (22) in order to authenticate said card on a wireless network (80) via an access terminal (30),
**in that** an AT-CSIM application (66) for the sequencing of the communication and an EAP-SIM application (67) are downloaded at the same hierarchical level as the USIM application, said applications being separate from one another and the AT-CSIM application and the EAP-SIM application executing in parallel to the USIM application;
**in that** a communication sequencing programme for the communication between the USIM card and the terminal (20) is installed on the terminal, said programme being a mutual exclusion algorithm Mutex ("Mutual exclusion") and a sequencing protocol designed to prevent the resources of the USIM card, which are shared by multiple applications, from being used simultaneously, said programme allowing to regulate access to the USIM card data, so that the AT-CSIM application (66) and the EAP-SIM application (67) are the only ones that can be executed, said programme using a state to control the execution of the AT-CSIM application, **in that** so long as that state is used, the USIM card is considered as in use for all the other controls, and **in that** as soon as the state is no longer used, said programme considers that the AT-CSIM application is completed;
**in that** said programme allows to temporarily block the AT controls used by the USIM application (65) for its standard function by privileging the AT-CSIM controls required for the EAP-SIM application (67), and allows to avoid possible dysfunction and disruption during the dialog session, said blockage only lasting a few milliseconds to influence the function of the USIM application managing the connection to the mobile network;
**in that**, during powering up by the terminal (20) a USIM session is initialised, and **in that** in a USIM session, an Application Dedicated File, ADF, application, among those present on the USIM card (24), is selected by default during initialisation, said ADF application being the one used by the USIM on channel 00;
and **in that**, to prevent any conflict with the USIM application, the AT-CSIM and EAP-SIM applications use another channel than the base channel 00, these other channels can be logical channels 01, 02 or 03.
